# EUROPÄISCHE PATENTSCHRIFT

(11) **EP 0 721 709 B1**
(45) Veröffentlichungstag und Bekanntmachung des Hinweises auf die Patenterteilung: **20.01.1999**
(21) Anmeldenummer: 94926782.7
(22) Anmeldetag: 15.09.1994
(51) Int. Cl.: H04B 10/17

(54) **SENDESTATION, ZWISCHENVERSTÄRKER UND EMPFANGSSTATION FÜR EIN OPTISCHES NACHRICHTENÜBERTRAGUNGSSYSTEM**
TRANSMISSION STATION, INTERMEDIATE REPEATER AND RECEIVER STATION FOR A FIBRE-OPTIC COMMUNICATIONS-TRANSMISSION SYSTEM
POSTE EMETTEUR, REPETEURS INTERMEDIAIRES ET POSTE RECEPTEUR POUR UN SYSTEME DE TRANSMISSION OPTIQUE DE MESSAGES

(30) Priorität: 30.09.1993 DE 4333367
(43) Veröffentlichungstag der Anmeldung: 17.07.1996
(73) Patentinhaber: ROBERT BOSCH GMBH, 70442 Stuttgart (DE)
(72) Erfinder: KOHN, Ulrich, D-71522 Backnang (DE)
(86) Internationale Anmeldenummer: DE9401065
(87) Internationale Veröffentlichungsnummer: WO9509492

(56) Entgegenhaltungen:
- EP-A- 0 450 524
- EP-A- 0 504 777
- GB-A- 2 257 320
- IEEE PHOTONICS TECHNOLOGY LETTERS, Bd.4, Nr.7, Juli 1992, NEW YORK US Seiten 717 - 720 P.M.GABLA ET AL '1111 km, Two-Channel IM-DD Transmission Experiment at 2.5 Gbit/s Through 21 In-Line Erbium-Doped Fiber Amplifiers'
- IEEE GLOBAL TELECOMMUNICATIONS CONFERENCE & EXHIBITION, GLOBECOM '90, Bd.3, 2. Dezember 1990, SAN DIEGO,CALIFORNIA,US Seiten 1846 - 1850 S.MATSUOKA ET AL 'Supervisory Signal Transmission Methods for Optical Aplifier Repeater Systems'

## Beschreibung

Die vorliegende Erfindung betrifft eine Sendestation, einen Zwischenverstärker und eine Empfangsstation für ein optisches Nachrichtenübertragungssystem mit mindestens einem Zwischenverstärker zum Übertragen von Nutzdaten mit hoher Bitrate mittels mindestens eines optisch schmalbandigen Trägersignales und zum Übertragen von Zusatzdaten mit niedriger Bitrate.

Eine Anordnung dieser Art ist z.B. aus der EP 440 276 A2 bekannt. Hier ist ein Lichtwellenleiter-Übertragungssystem offenbart, bei dem Nutzdaten mit hoher Bitrate und Zusatzdaten für Service zwecke mit niedriger Bitrate in einem Lichtwellenleiter in einer Richtung übertragen werden. Die Nutzdaten hoher Bitrate werden z.B. mit einer Datenrate von mehreren 100 MBit/sec. in dem Wellenlängenbereich von 1500 bis 1600 nm übertragen. Dieser Wellenlängenbereich entspricht dem sogenannten dritten optischen Fenster des Lichtwellenleiters, bei dem die optische Dämpfung ein Minimum aufweist. Die Zusatzdaten werden z.B. mit einer Datenrate von einigen hundert kBit/sec. in einem Wellenlängenbereich um
1300 nm übertragen. Dies ist das sogenannte zweite optische Fenster des Lichtwellenleiters.

Dieses Übertragungssystem verwendet Zwischenverstärker mit optischen Faserverstärkern für den Wellenlängenbereich von ca. 1500 bis 1600 nm, um die Dämpfungsverluste in der Glasfaser auszugleichen. Die Zusatzdaten werden vor den Faserverstärkern mittels eines Wellenlängenmultiplexers ausgekoppelt, anschließend detektiert, elektrisch verarbeitet, elektro-optisch gewandelt und nach dem Faserverstärker wieder in die Glasfaser eingekoppelt.

Die Verarbeitung der Zusatzdaten in den Zwischenverstärkern erfordert einen relativ hohen technischen Aufwand.

In der DE 35 06 715 A1 ist ein Verfahren zur optischen Nachrichtenübertragung offenbart, mit dem Daten über einen Lichtwellenleiter in entgegengesetzte Richtungen übertragen werden. In der einen Richtung werden Daten mit hoher Bitrate mittels eines optisch schmalbandigen Trägersignales, z.B. eines Halbleiterlasers, gesendet, während in der Gegenrichtung Daten mit niedrigerer Bitrate mittels eines optisch breitbandigen Trägersignales, z.B. einer Luminiszenzdiode (LED), gesendet werden. Die Wellenlängen des schmalbandigen und des breitbandigen Trägersignales liegen in einem Bereich mit geringer Dispersion des Lichtwellenleiters.

Die Aufgabe der Erfindung ist es, eine Sendestation, einen Zwischenverstärker und eine Empfangsstation für ein Nachrichtenübertragungssystem der eingangs genannten Art anzugeben, die mit möglichst geringem Aufwand realisierbar sind.

Diese Aufgabe wird erfindungsgemäß durch die Merkmale der Ansprüche 1, 6 und 11 gelöst. Vorteilhafte Ausführungsformen gehen aus den abhängigen Ansprüchen hervor.

Mittels der Sendestation, des Zwischenverstärkers und der Empfangsstation können neben Nutzdaten hoher Bitrate mit einem optisch schmalbandigen Trägersignal Zusatzdaten mit niedriger Bitrate, z.B. für Servicezwecke, mit geringem Aufwand innerhalb der Verstärkungsbandbreite eines optischen Faserverstärkers übertragen werden. Dies wird durch ein breitbandiges optisches Trägersignal ermöglicht, dessen Wellenlänge im selben Wellenlängebereich liegt wie das schmalbandige Trägersignal der Nutzdaten. Das schmalbandige und das breitbandige Trägersignal können daher gemeinsam mittels des optischen Faserverstärkers verstärkt werden. Die für den Betrieb des Faserverstärkers notwendigen Servicedaten, die in den Zusatzdaten enthalten sind, können mit Hilfe eines einfachen optischen Kopplers, der nicht wellenlängenselektiv zu sein braucht, in die Lichtwellenleiter-Übertragungsstrecke ein- und ausgekoppelt werden.

Das optisch breitbandige Trägersignal kann in einem Sender beispielsweise mittels einer Superluminiszenzdiode erzeugt werden. Die diesem Signal aufmodulierten Zusatzdaten geringer Bitrate können in einem Empfänger z.B. mit einem einfachen Tiefpaßfilter von den hochfrequenten Spektralanteilen des schmalbandigen optischen Trägersignals getrennt werden.

Um das schmalbandige von dem breitbandigen Trägersignal zu trennen, genügt ein optisches Filter.

Die Sendestation, der Zwischenverstärker und die Empfangsstation sind auch für optische Nachrichtenübertragungssysteme geeignet, die mehrere Übertragungskanäle mit mehreren optisch schmalbandigen Trägersignalen verwenden. Hier besteht die Möglichkeit, entweder jedem Übertragungskanal ein optisch breitbandiges Signal mit Zusatzdaten zuzuordnen, oder ein optisch breitbandiges Signal mit Zusatzdaten für alle Übertragungskanäle vorzusehen.

Beispielhafte Ausführungsformen der Erfindung sind in den schematischen Zeichnungen dargestellt und werden im folgenden erläutert. Es zeigen:
Figur 1 einen Zwischenverstärker einer Lichtwellenleiter-Übertragungsstrecke, der einen Sender und einen Empfänger zum Übertragen von Zusatzdaten mit niedriger Bitrate enthält,
Figur 2 die optische Intensität als Funktion der Wellenlänge einer Überlagerung von einem breitbandigen und drei schmalbandigen Trägersignalen,
Figur 3 ein optisches Nachrichtenübertragungssystem mit einem optisch schmalbandigen Trägersignal, das Sender und Empfänger zum Übertragen von Zusatzdaten niedriger Bitrate enthält,
Figur 4 mehrere Sendestationen eines Vielkanal-Übertragungssystems, die jeweils einen Sender zum Übertragen von Zusatzdaten mit niedriger Bitrate enthalten, und
Figur 5 eine Sendestation eines Vielkanal-Übertragungssystems, das einen Sender zum Übertragen von Zusatzdaten mit niedriger Bitrate enthält.

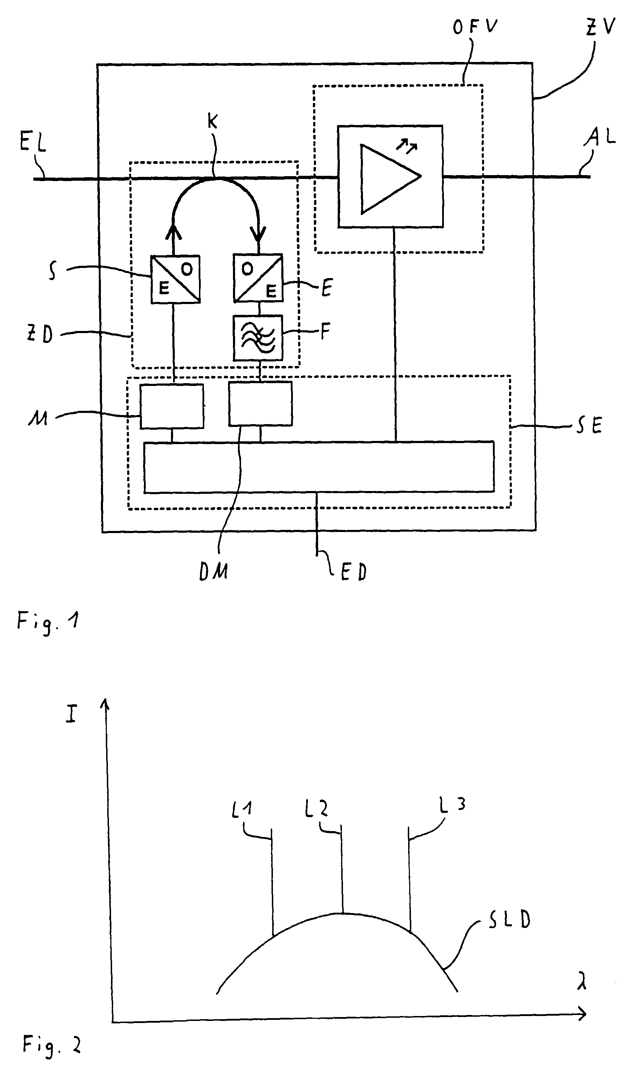

In der Figur 1 ist ein Zwischenverstärker ZV eines optischen Nachrichtenübertragungssystems mit einem eingangsseitigen Lichtwellenleiter EL und einem ausgangsseitigen Lichtwellenleiter AL dargestellt. Ein optischer Faserverstärker OFV verstärkt die optischen Signale des Nachrichtenübertragungssystems rein optisch, ohne elektrooptische Wandlung, beispielsweise in einem Wellenlängenbereich von 1500 bis 1600 nm, einem optischen Fenster des Lichtwellenleiters. Die Verstärkungsbandbreite des optischen Faserverstärkers OFV liegt in der Größenordnung von 50 nm.

Zum Übertragen von Daten mit hoher Bitrate, z.B. Bitraten von über einem GBit/s, müssen optisch schmalbandige Trägersignale verwendet werden. Hierfür geeignete Sender sind beispielsweise Halbleiter-Laser, wie DFB(Distributed-Feed-Back)-Laser mit Linienbreiten von kleiner 1 nm.

Der Zwischenverstärker ZV enthält eine Anordnung ZD, die mittels eines optischen Kopplers K mit dem eingangsseitigen Lichtwellenleiter EL gekoppelt ist, zum Senden und Empfangen eines Trägersignals mit Zusatzdaten niedriger Bitrate. Diese Daten dienen z.B. Überwachungs- und Servicezwecken. Die Anordnung ZD enthält einen Sender S und einen Empfänger E, in denen diese Zusatzdaten elektrooptisch gewandelt werden. Der Sender S verwendet eine breitbandige optische Quelle, z.B. eine Superluminiszenzdiode, deren Linienbreite ca. 50 nm beträgt. Mit dieser optischen Quelle können Zusatzdaten mit einer Bitrate von z.B. 64 kHz oder mehreren 100 kHz übertragen werden. Das optisch breitbandige und das optisch schmalbandige Trägersignal werden in den Lichtwellenleitern EL und AL in einer Richtung übertragen.

Die Wellenlänge des von dem Sender S emittierten Trägersignals liegt im selben Wellenlängenbereich wie das optisch schmalbandige Trägersignal. Durch diese Maßnahme kann der optische Faserverstärker OFV auch zur Verstärkung des optisch breitbandigen Trägersignals genutzt werden. Zudem wird durch das Trägersignal der Zusatzdaten nicht ein eventuell anderweitig verwendeter Wellenlängenbereich eingeschränkt.

Die Intensität eines von einem Laser emittierten Trägersignals ist erheblich höher als die einer Superluminiszenzdiode, bezogen auf den sich überlappenden Wellenlängenbereich. Dies wird in dem Diagramm der Figur 2 verdeutlicht. Hier ist die Intensität I gegenüber der Wellenlänge λ aufgetragen. L1, L2 und L3 bezeichnen optisch schmalbandige Trägersignale, wie sie von Lasern emittiert werden. Die Kurve SLD zeigt vereinfacht die spektrale Intensität des von einer breitbandigen Superluminiszenzdiode ausgestrahlten Lichts.

Die Signale L1, L2 und L3 können mit einem optisch schmalbandigen Filter in einem Empfänger selektiert werden. Das breitbandige Trägersignal erscheint nach diesem Filter nur noch als kleiner Rauschbeitrag auf dem schmalbandigen Trägersignal.

Das optisch breitbandige Trägersignal wird in einem Empfänger E (Fig. 1) optoelektrisch gewandelt. Die Daten mit niedriger Bitrate können jetzt mit Hilfe eines Filters F, z.B. eines Tiefpaßfilters, von den hochfrequenten Spektralanteilen eines mit hohen Bitraten modulierten Lasersignales getrennt werden. Der Empfänger E kann auch so beschaffen sein, daß er nur elektrisch niederfrequente Signale optoelektrisch wandelt. Dann wird das Filter F nicht benötigt.

Als Koppler K genügt ein einfacher, nicht wellenlängenselektiver Koppler, der einen Teil des Lichts aus den Lichtwellenleiter EL für den Empfänger E auskoppelt und das optische Signal des Senders S einkoppelt. Der Koppler K ist dermaßen gestaltet, daß das optische Trägersignal des Senders S von dem empfindlichen Empfänger E nicht gesehen wird.

Die Anordnung ZD kann in dem Zwischenverstärker ZV auch nach dem Faserverstärker OFV angeordnet sein. Dann wird das in dem Lichtwellenleiter EL geführte optisch breitbandige Signal in dem Faserverstärker OFV verstärkt, bevor es über den Koppler K den Empfänger E erreicht.

Der Zwischenverstärker ZV besitzt eine Steuereinheit SE zum Betrieb des optischen Faserverstärkers OFV. Diese enthält zudem einen Modulator M, der mit dem Sender S verbunden ist, und einen Demodulator DM, der das Ausgangssignal des Filters F demoduliert. Die Zusatzdaten können Telemetriedaten der Steuereinheit SE enthalten, oder Daten einer externen Schnittstelle ED, z.B. einer Telefonverbindung.

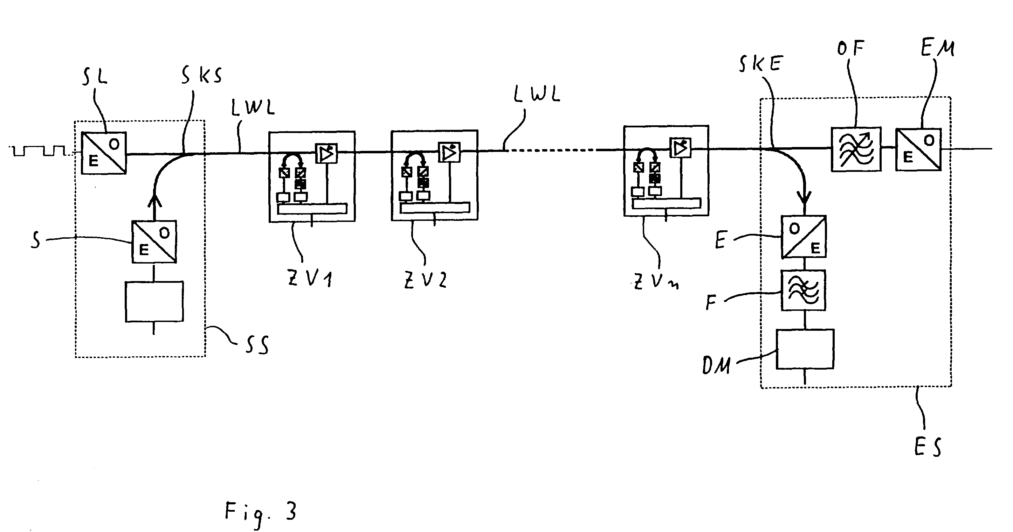

In der Figur 3 ist ein optisches Nachrichtenübertragungssystem mit einer Sendestation SS, einer Empfangsstation ES, einer Lichtwellenleiterverbindung LWL und optischen Zwischenverstärkern ZV1, ZV2 ..., ZVn dargestellt. In einer Sendeanordnung SL, einem ersten Sender der Sendestation SS werden Daten mit hoher Bitrate auf ein optisch schmalbandiges Trägersignal aufmoduliert. Die Sendestation SS enthält außerdem einen zweiten Sender S zum Übertragen von Zusatzdaten mit niedriger Bitrate mittels eines optisch breitbandigen Trägersignales. Dessen optisches Signal wird mittels eines Kopplers SKS in die Lichtwellenleiterverbindungen LWL eingekoppelt. Mit den optischen Zwischenverstärkern ZV1 bis ZVn wird die Dämpfung der Lichtwellenleiterverbindung LWL kompensiert.

In der Empfangsstation ES wird in einem Koppler SKE ein Teil des optischen Eingangssignals zur Ermittlung der Zusatzdaten mit niedriger Bitrate ausgekoppelt. Diese werden mittels eines Empfängers E, Filters F und Demodulators DM, wie vorangehend beim Zwischenverstärker ZV der Figur 1 beschrieben, aus dem optischen Signal extrahiert.

Das Nutzsignal wird in der Empfangsstation ES mittels eines schmalbandigen optischen Filters OF gefiltert, um das breitbandige Trägersignal zu unterdrücken, und in dem Empfänger EM elektrooptisch gewandelt.

Das optische Nachrichtenübertragungssystem kann auch auf Systeme mit mehreren Nutzkanälen, jeder mit einem optisch schmalbandigen Trägersignal zum Übertragen von Daten mit hoher Bitrate, erweitert werden. Die schmalbandigen Trägersignale müssen dabei im nutzbaren Verstärkungsbereich der optischen Faserverstärker liegen. Verwendbare Systeme sind z.B. WDM-Systeme (Wavelength Division Multiplex) oder CMC-Systeme (Coherent Multi Channel).

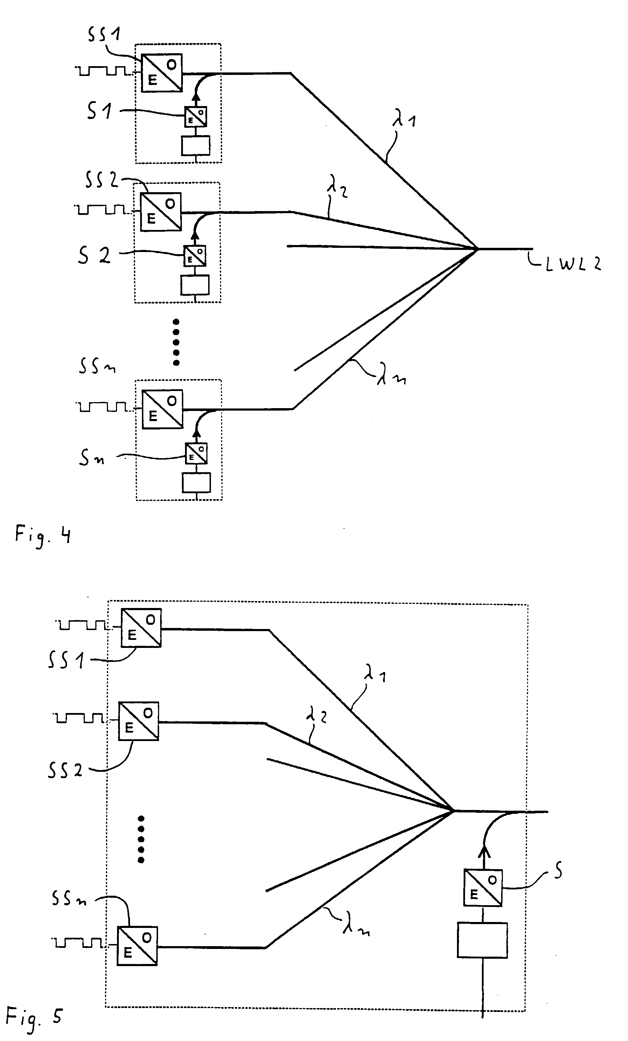

In der Figur 4 ist die Sendeseite eines WDM-Systems mit n Nutzkanälen dargestellt. Jeder Nutzkanal enthält Daten mit hoher Bitrate, die in einer Sendestation SS1, SS2, ... SSn auf ein optisch schmalbandiges Trägersignal einer bestimmten Wellenlänge λ 1, λ 2, ... λ n aufmoduliert werden. Diese schmalbandigen Trägersignale werden mittels eines Kopplers zusammengefaßt und über einen Lichtwellenleiter LWL2 übertragen.

Jede Sendestation SS1, ... SSn enthält einen Sender S1, S2, ... Sn zum Übertragen von Zusatzdaten mit niedriger Bitrate über ein optisch breitbandiges Trägersignal. Bei diesem WDM-System sind zum Empfang die einzelnen Sendestationen SS1 bis SSn voneinander unabhängig.

Bei dem WDM-System der Figur 5 sind n Sendeeinheiten SS1 bis SSn zusammen angeordnet. Hier genügt ein Sender S zum Übertragen der Zusatzdaten. Die Empfangsstationen und die Zwischenverstärker dieser WDM-Systeme sind zum Empfang der Zusatzdaten mit den entsprechenden Empfängern, wie vorangehend beschrieben, ausgerüstet.

## Patentansprüche

1. Sendestation (SS) für ein optisches Nachrichtenübertragungssystem mit mindestens einem Zwischenverstärker (ZV1), die einen ersten Sender (SL) zum Übertragen von Nutzdaten mit hoher Bitrate mittels mindestens eines optisch schmalbandigen Trägersignales und einen zweiten Sender (S) zum Übertragen von Zusatzdaten mit niedriger Bitrate enthält, wobei die Nutzdaten und die Zusatzdaten in der gleichen Richtung übertragen werden, dadurch gekennzeichnet, daß der zweite Sender (S) so beschaffen ist, daß die Zusatzdaten mit niedriger Bitrate über mindestens ein optisch breitbandiges Trägersignal ausgesendet werden, und daß das schmalbandige und das breitbandige Trägersignal im selben Wellenlängenbereich liegen.

2. Sendestation nach Anspruch 1, dadurch gekennzeichnet, daß die Intensität pro Wellenlänge des optisch breitbandigen Trägersignales kleiner ist als die des optisch schmalbandigen Trägersignales.

3. Sendestation nach Anspruch 1 oder 2, dadurch gekennzeichnet, daß sich die Wellenlängenbereiche des optisch schmalbandigen und des optisch breitbandigen Trägersignales überlappen.

4. Sendestation nach einem der Ansprüche 1 bis 3, dadurch gekennzeichnet, daß das optisch schmalbandige und das optisch breitbandige Trägersignal innerhalb der Verstärkungsbandbreite eines optischen Faserverstärkers (OFV) liegen.

5. Zwischenverstärker (ZV) für ein optisches Nachrichtenübertragungssystem zum Übertragen von Nutzdaten mit hoher Bitrate mittels mindestens eines optisch schmalbandigen Trägersignales und zum Übertragen von Zusatzdaten mit niedriger Bitrate, der einen Sender (S) zum Übertragen der Zusatzdaten enthält, dessen optisches Trägersignal den gleichen Richtungssinn hat wie der des optisch schmalbandigen Trägersignales, dadurch gekennzeichnet, daß der Sender (S) so beschaffen ist, daß die Zusatzdaten mit niedriger Bitrate über mindestens ein optisch breitbandiges Trägersignal ausgesendet werden, und daß das schmalbandige und das breitbandige Trägersignal im selben Wellenlängenbereich liegen.

6. Zwischenverstärker nach Anspruch 5, dadurch gekennzeichnet, daß sich die Wellenlängenbereiche des optisch schmalbandigen und des optisch breitbandigen Trägersignales überlappen.

7. Zwischenverstärker nach Anspruch 5 oder 6, dadurch gekennzeichnet, daß das optisch schmalbandige und das optisch breitbandige Trägersignal innerhalb der Verstärkungsbandbreite eines in ihm angeordneten optischen Faserverstärkers (OFV) liegen.

8. Zwischenverstärker nach Anspruch 5, 6 oder 7, dadurch gekennzeichnet, daß die Intensität pro Wellenlänge des optisch breitbandigen Trägersignales am Ausgang des Zwischenverstärkers (ZV) kleiner ist als die des optisch schmalbandigen Trägersignales.

9. Empfangsstation (ES) für ein optisches Nachrichtenübertragungssystem mit mindestens einem Zwischenverstärker (ZV1), wobei die Empfangsstation (ES) einen ersten Empfänger (EM) zum Empfangen von Nutzdaten hoher Bitrate, die mittels eines optisch schmalbandigen Trägersignales übertragen werden, und einen zweiten Empfänger (E) zum Empfangen von Zusatzdaten niedriger Bitrate, die mittels eines zweiten optischen Trägersignales übertragen werden, enthält, dadurch gekennzeichnet, daß der erste Empfänger (EM) Mittel enthält, um das schmalbandige Trägersignal, das im selben Wellenlängenbereich liegt, wie das Trägersignal der Zusatzdaten, das optisch breitbandig ist, zu detektieren, und daß der zweite Empfänger (E) Mittel enthält, das optisch breitbandige Trägersignal zu detektieren.

10. Empfangsstation nach Anspruch 9, dadurch gekennzeichnet, daß in der Empfangsstation zur Detektion des optisch breitbandigen Trägersignals ein optischer Koppler (SKE), der einen Teil des Empfangssignals auskoppelt, ein optischer Empfänger (E) und ein Filter (F), das die hochfrequenten Spektralanteile des optisch schmalbandigen Trägersignals ausfiltert, angeordnet sind.

11. Empfangsstation nach einem der Ansprüche 9 oder 10, dadurch gekennzeichnet, daß in ihr zur Detektion des optisch schmalbandigen Trägersignals ein schmalbandiges optisches Filter (OF) angeordnet ist, dessen Durchlaßbereich nur das optisch schmalbandige Trägersignal umfaßt.

## Claims

1. Transmission station (SS) for an optical telecommunications transmission system having at least one repeater (ZV1), which contains a first transmitter (SL) for transmitting useful data at a high bit rate by means of at least one optical narrowband carrier signal and a second transmitter (S) for transmitting additional data at a low bit rate, the useful data and the additional data being transmitted in the same direction, characterized in that the second transmitter (S) is constituted in such a way that the additional data are broadcast at a low bit rate by means of at least one optical broadband carrier signal, and in that the narrowband and the broadband carrier signal lie in the same wavelength range.

2. Transmission station according to Claim 1, characterized in that the intensity per wavelength of the optical broadband carrier signal is lower than that of the optical narrowband carrier signal.

3. Transmission station according to Claim 1 or 2, characterized in that the wavelength ranges of the optical narrowband carrier signal and that of the optical broadband carrier signal overlap.

4. Transmission station according to one of Claims 1 to 3, characterized in that the optical narrowband carrier signal and the optical broadband carrier signal lie within the amplification bandwidth of a fibre-optic amplifier (OFV).

5. Repeater (ZV) for an optical telecommunications transmission system for transmitting useful data at a high bit rate by means of at least one optical narrowband carrier signal and for transmitting additional data at a low bit rate, which repeater (ZV) contains a transmitter (S) for transmitting the additional data, the optical carrier signal of which transmitter (S) has the same direction as that of the optical narrowband carrier signal, characterized in that the transmitter (S) is constituted in such a way that the additional data are broadcast at a low bit rate by means of at least one optical broadband carrier signal, and in that the narrowband carrier signal and the broadband carrier signal lie in the same wavelength range.

6. Repeater according to Claim 5, characterized in that the wavelength ranges of the optical narrowband carrier signal and of the optical broadband carrier signal overlap.

7. Repeater according to Claim 5 or 6, characterized in that the optical narrowband carrier signal and the optical broadband carrier signal lie within the amplification bandwidth of a fibre-optic amplifier (OFV) arranged therein.

8. Repeater according to Claim 5, 6 or 7, characterized in that the intensity per wavelength of the optical broadband carrier signal is lower at the output of the repeater (ZV) than that of the optical narrowband carrier signal.

9. Reception station (ES) for an optical telecommunications transmission system having at least one repeater (ZV1), the reception station (ES) containing a first receiver (EM) for receiving useful data at a high bit rate, which are transmitted by means of an optical narrowband carrier signal, and a second receiver (E) for receiving additional data at a low bit rate, which are transmitted by means of a second optical carrier signal, characterized in that the first receiver (EM) contains means for detecting the narrowband carrier signal which lies in the same wavelength range as the carrier signal of the additional data, which signal is an optical broadband signal, and in that the second receiver (E) contains means for detecting the optical broadband carrier signal.

10. Reception station according to Claim 9, characterized in that arranged in the reception station for detecting the optical broadband carrier signal are an optical coupler (SKE), which extracts a portion of the reception signal, an optical receiver (E) and a filter (F) which filters out the high-frequency components of the spectrum of the optical narrowband carrier signal.

11. Reception station according to one of Claims 9 or 10, characterized in that a narrowband optical filter (OF) whose passband comprises only the optical narrowband carrier signal is arranged in said station in order to detect the optical narrowband carrier signal.

## Revendications

1. Poste émetteur (55) pour un système de transmission optique de messages, comprenant au moins un amplificateur intermédiaire (ZV1) qui contient un premier émetteur (SL) servant à transmettre des données utiles avec un débit binaire élevé au moyen d'au moins un signal porteur à bande optiquement étroite et un deuxième émetteur (S) qui sert à transmettre des données additionnelles avec un débit binaire faible, les données utiles et les données additionnelles étant transmises dans le même sens,
caractérisé en ce que
• le deuxième émetteur (S) est réalisé de telle façon que les données additionnelles sont émises avec un débit binaire bas au moyen d'au moins un signal porteur optiquement à large bande, et
• le signal à bande étroite et le signal à large bande se trouvent dans la même plage de longueurs d'ondes.

2. Poste émetteur selon la revendication 1,
caractérisé en ce que
l'intensité par longueur d'ondes du signal porteur optiquement à large bande est plus petite que celle du signal porteur optiquement à bande étroite.

3. Poste émetteur selon la revendication 1 ou 2,
caractérisé en ce que
les plages des longueurs d'ondes du signal porteur optiquement à bande étroite et du signal porteur optiquement à large bande se recouvrent.

4. Poste émetteur selon l'une des revendications 1 à 3,
caractérisé en ce que
le signal porteur optiquement à bande étroite et le signal porteur optiquement à large bande se trouvent à l'intérieur de la largeur de bande d'amplification d'un amplificateur optique à fibres (OFV).

5. Amplificateur intermédiaire (ZV) pour un système de transmission optique de messages servant à transmettre des données utiles avec un débit binaire élevé au moyen d'au moins un signal porteur à bande optiquement étroite et à transmettre des données additionnelles avec un débit binaire bas qui contient un émetteur (S) servant à transmettre les données additionnelles, dont le signal optique porteur a le même sens d'orientation que celui du signal porteur optiquement à bande étroite,
caractérisé en ce que
• l'émetteur (S) est réalisé de telle façon que les données additionnelles sont émises avec un débit binaire au moyen d'au moins un signal porteur optiquement à large bande, et,
• le signal porteur à bande étroite et le signal porteur à large bande se trouvent dans la même plage de longueurs d'ondes.

6. Amplificateur intermédiaire selon la revendication 5,
caractérisé en ce que
les plages des longueurs d'ondes du signal porteur optiquement à bande étroite et du signal porteur optiquement à large bande se recouvrent.

7. Amplificateur intermédiaire selon la revendication 5 ou la revendication 6,
caractérisé en ce que
le signal porteur optiquement à bande étroite et le signal porteur optiquement à large bande se trouvent à l'intérieur de la largeur de bande d'amplification d'un amplificateur optique à fibres (OFV), disposé en lui.

8. Amplificateur intermédiaire selon la revendication 5, ou la revendication 6, ou la revendication 7,
caractérisé en ce que
l'intensité par longueur d'ondes du signal porteur optiquement à large bande est plus petite à la sortie de l'amplificateur intermédiaire (ZV) que celle du signal porteur optiquement à bande étroite.

9. Poste récepteur (ES) pour un système optique de transmission de messages qui comprend au moins un amplificateur intermédiaire (ZV1), le poste récepteur (ES) contenant un premier récepteur (EM) servant à recevoir des données utiles avec un débit binaire élevé, données qui sont transmises au moyen d'un signal porteur optiquement à bande étroite, et un deuxième récepteur (E) servant à recevoir des données additionnelles avec un débit binaire bas, données additionnelles qui sont transmises au moyen d'un deuxième signal porteur optique,
caractérisé en ce que
• le premier récepteur (EM) contient des moyens pour détecter le signal porteur à bande étroite qui se trouve dans la même plage de longueurs d'ondes, que le signal porteur des données additionnelles qui est optiquement à large bande,
• le deuxième récepteur (E) contient des moyens, pour détecter le signal porteur optiquement à large bande.

10. Poste récepteur selon la revendication 9,
caractérisé en ce que
dans le poste récepteur servant à détecter le signal porteur optiquement à large bande on dispose un coupleur optique (SKE) qui déclenche une partie du signal de réception, un récepteur optique (E) et un filtre (F) qui extrait par filtration les fractions du spectre à haute fréquence du signal porteur optiquement à bande étroite.

11. Poste récepteur selon l'une des revendications 9 ou 10,
caractérisé en ce que
l'on dispose dedans pour détecter le signal porteur optiquement à bande étroite un filtre (OF) optiquement à bande étroite, dont la plage de passage ne comprend que le signal porteur optiquement à bande étroite.
